# EUROPEAN PATENT SPECIFICATION

(11) **EP 1 741 593 B1**
(45) Date of publication and mention of the grant of the patent: **20.08.2008**
(21) Application number: 06076220.0
(22) Date of filing: 14.06.2006
(51) Int. Cl.: B60N 2/28

(54) **Child vehicle seat**
Fahrzeugkindersitz
Siège enfant pour véhicule

(30) Priority: 04.07.2005 NL 1029417
(43) Date of publication of application: 10.01.2007
(73) Proprietor: Maxi Miliaan B.V., 5704 RD Helmond (NL)
(72) Inventor: Fransen, Martinus Theodorus, 5663 EN Geldrop (NL); Lutkemeier, Eduard Cornelis, 5211 DC 'S-Hertogenbosch (NL)
(74) Representative: Veldman-Dijkers, Cornelia G. C.

(56) References cited:
- EP-A- 0 818 346
- WO-A-03/008226
- DE-A1- 19 545 266
- FR-A- 2 745 535

## Description

The invention relates to a child vehicle seat comprising a seat portion and a back support, which back support is provided with belt guides on a side remote from the seat portion for guiding a shoulder belt connected to the vehicle.

With such a child vehicle seat, which is known from International patent application WO-A2-03/008226, each belt guide is formed by a slot, in which a shoulder belt can be positioned. In use, the shoulder belt extends between the slots over a front side of the back support. The front side of the back support is the side which, in use, is in contact with the child. In practice, the child's head will rest against the belt portion that extends between the slots rather than against the relatively soft upholstery of the soft back support. This adversely affects the child's comfort. In addition, there is a risk that the child's hairs will get trapped between the back support and the belt portion extending between the slots, which is undesirable of course.

The object of the invention is to provide a child vehicle seat wherein the back support can be firmly secured in a vehicle by means of a shoulder belt whilst avoiding the above-mentioned drawbacks.

This object is accomplished with the child vehicle seat according to the invention in that the back support is furthermore provided with at least two slots located between the belt guides, wherein, in use, the belt extends between said slots on another side of the back support than between a slot and an adjacent belt guide.

The shoulder belt extends between each slot and the adjacent belt guide at the front side of the back support, whilst the belt extends between the slots at the rear side of the back support remote from the front side. As a result, the child's head will rest against the relatively soft upholstery of the back support, and there is no risk of the child's hairs getting trapped between the belt and the back support.

It has to be noticed that from FR-2.745.535 a child vehicle seat is known comprising a seat portion and a back support which back support is provided with belt guides for guiding a shoulder belt connected to the vehicle along a back side of the back support.

An embodiment of the child vehicle seat according to the invention is characterised in that the belt guide is provided with a clamp that is pivoted to the child vehicle seat by means of a pivot pin, which pivot pin is located near a side of the second contact surface remote from the first contact surface, said clamp having at least a first and a second clamping surface, which, in the position in which the clamp has been pivoted towards the belt guide, extend substantially parallel to the first and clamp has been pivoted towards the belt guide, extend substantially parallel to the first and the second contact surface, respectively.

The shoulder belt is conventionally attached to the vehicle via an automatic belt retractor with one end. Near the automatic belt retractor, the shoulder is in contact with the first contact surface of one belt guide. On a side remote from the automatic belt retractor, the belt is provided with a buckle tongue, which can be detachably connected to a belt buckle. Near this side, the shoulder belt is in contact with the second contact surface of the other belt guide. In this way it is ensured that the belt is properly guided on both sides of the back support.

Another embodiment of the child vehicle seat according to the invention is characterised in that the belt guide is provided with a clamp that is pivoted to the child vehicle seat by means of a pivot pin, which pivot pin is located near a side of the second contact surface remote from the first contact surface, said clamp having at least a first and second clamping surface, which, in the position in which the clamp has been pivoted towards the belt guide, extend substantially parallel to the first and the second contact surface, respectively.

When such a clamp is used, the belt is clamped firmly against the contact surfaces of the belt guide.

Yet another embodiment of the child vehicle seat according to the invention is characterised in that the clamp can be detachably interlocked with the belt guide on a side remote from the pivot pin.

In this way the belt is locked to the child vehicle seat, as a result of which the child vehicle seat is firmly secured in the vehicle by means of the belt.

Yet another embodiment of the child vehicle seat according to the invention is characterised in that the belt guide comprises a slot provided in the back support.

The first and the second portion of the slot ensure that a proper guidance of the belt is realised on either side of the back support.

The invention will now be explained in more detail with reference to the drawings, in which:
Figure 1 is a perspective view of a child vehicle seat according to the invention, seen from the right-hand rear side thereof;
Figure 2 is a perspective view of the child vehicle seat that is shown in figure 1, seen from the left-hand rear side thereof;
Figures 3A and 3B are side views of another embodiment of a child vehicle seat according to the invention, in which the child vehicle seat is shown with an open clamp and with a closed clamp, respectively;
Figures 4A and 4B are views of the child vehicle seat of figures 3A and 3B with a belt abutting against the first contact surface, in which the child vehicle seat is shown with an open clamp and with a closed clamp, respectively;
Figures 5A and 5B are views of the child vehicle seat of figures 3A and 3B with a belt abutting against the second contact surface, in which the child vehicle seat is shown with an open clamp and with a closed clamp, respectively.

Like parts are indicated by the same numerals in the figures.

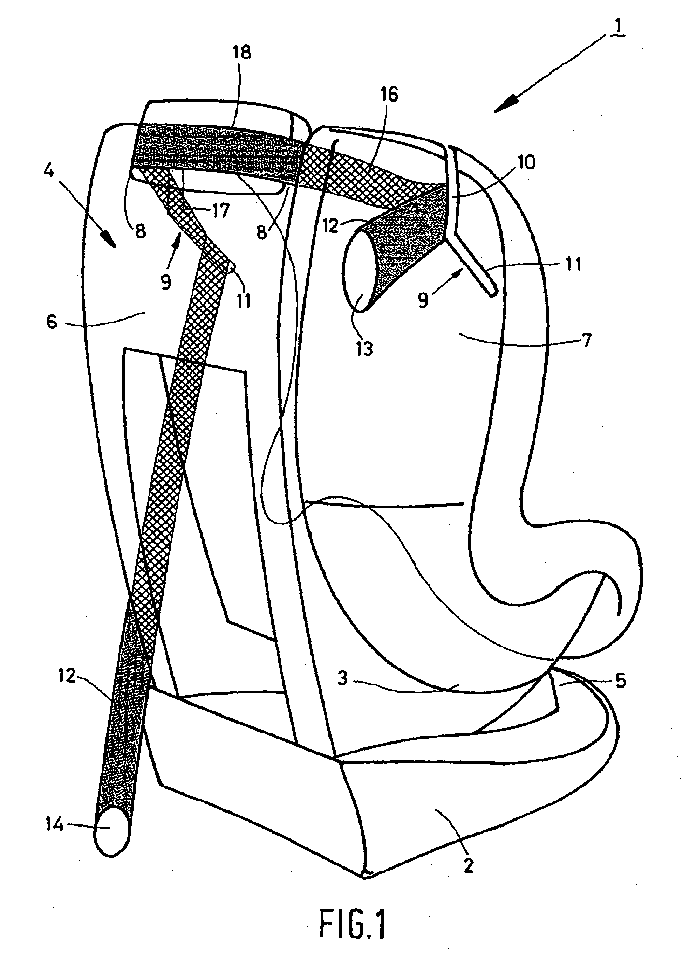

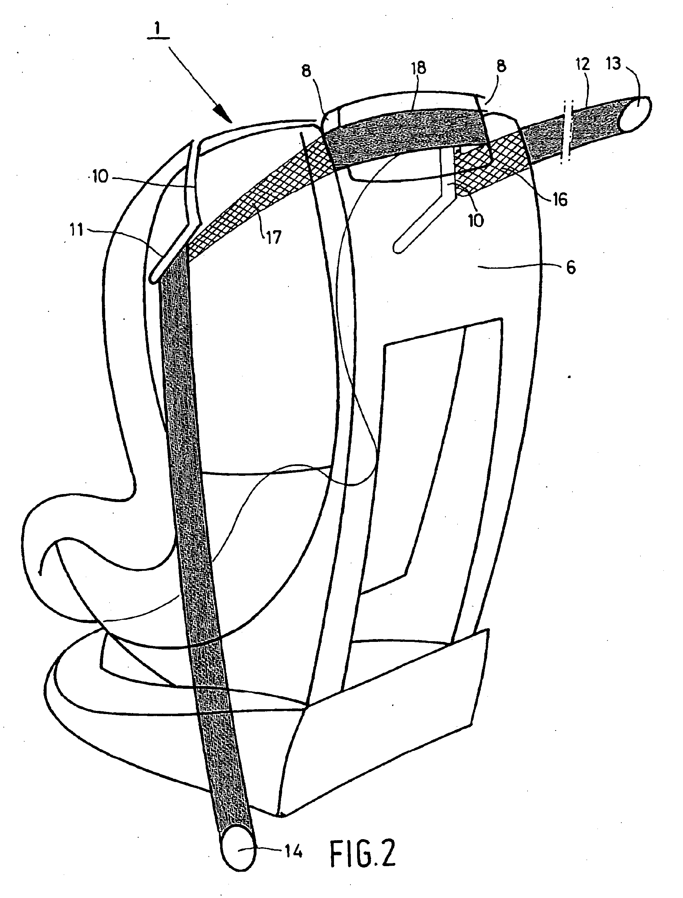

Figure 1 and figure 2 are perspective views of a child vehicle seat 1 according to the invention, seen from the right-hand rear side and the left-hand rear side, respectively, of the child vehicle seat. The child vehicle seat 1 comprises a base 2, which supports a seat portion 3 and a back support 4 connected thereto. The base 2 is provided with a belt guide 5 at a front side of the seat portion 3. The back support 4 comprises a central part 6 and two lateral supports 7 extending substantially transversely to the central part 6. Substantially vertically extending slots 8 are provided near the transition between the central part 6 and the lateral supports 7. Each support 7 is provided with a belt guide 9 comprising a slot. The belt guide 9 comprises a first slot portion 10, which extends substantially parallel to the slot 8, and a second slot portion 11 connecting thereto, which extends from the first slot portion 10 in a direction away from the central part 6 of the back support 4 towards the seat portion 3.

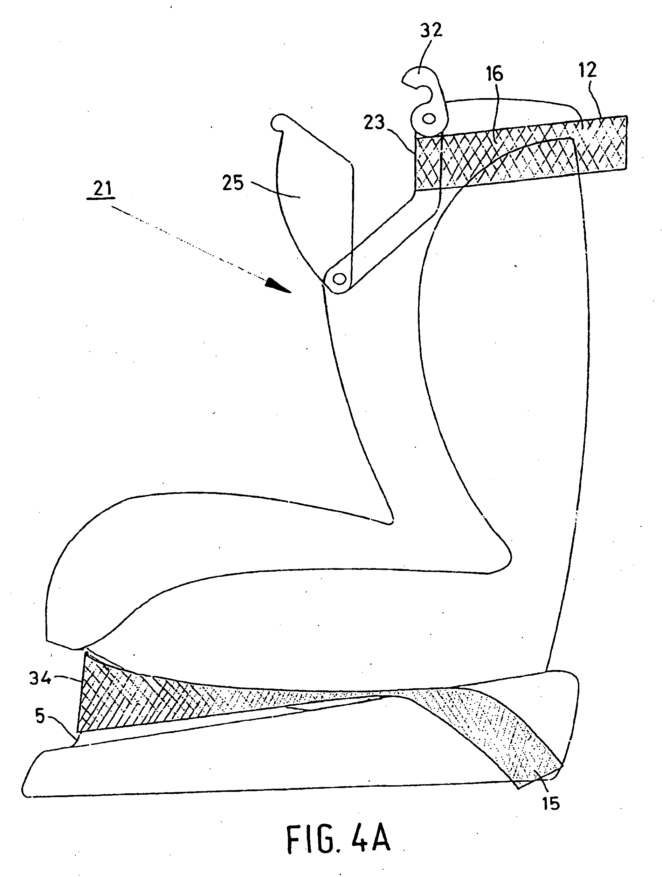

The securing of the child vehicle seat 1 in a vehicle fitted with a so-called three-point seat-belt takes place in the following manner. A so-called three-point seat-belt comprises an elongated belt 12, a first end 13 of which is attached to an automatic belt retractor near an upper side of a vehicle seat. A buckle tongue F can slide over the belt 12 and be detachably interlocked with a belt buckle 14 positioned near the seat portion of the vehicle seat. The belt 12 is fixedly connected to the vehicle near the seat portion of the vehicle seat with an end 15 remote from the end 13 (see figures 4A-5B). Such a three-point seat-belt is known per se and will not be explained in more detail herein, therefore. To secure the child vehicle seat 1 by means of such a three-point seat-belt, the belt 12 is inserted into the small portion 10 of the first belt guide 9, led over the front side of the support 7 to the slot 8, from where it is led over the rear side of the central part 6 to the other slot 8 and through the slot 8 to the front side of the other support 7, whereupon it is finally led out of the child vehicle seat 1 via the second slot portion 11 towards the belt buckle 14. As is clearly shown in figures 1 and 2, the belt 12 extends over the rear side of the central part 6 of the back support 4, as a result of which a child seated on the seat portion 3 and resting against the central part 6 will not experience any discomfort caused by the presence of the belt 12. Since the belt 12 is in contact with the back support 4 at a relatively great distance from the seat portion, a secure fixation of the child vehicle seat 1 in the vehicle is ensured. The belt 12 extends from the belt buckle 14 over the belt guide 5 that is present at the front side of the child vehicle seat 1. In this way also the lower side of the child vehicle seat 1 is securely connected to the vehicle seat. The part of the belt 12 that extends over the belt guide 5 is referred to as the hip belt, whilst the portions 16, 17 extending over the lateral supports 7 and the portion 18 extending behind the central part 6 are jointly referred to as the shoulder belt.

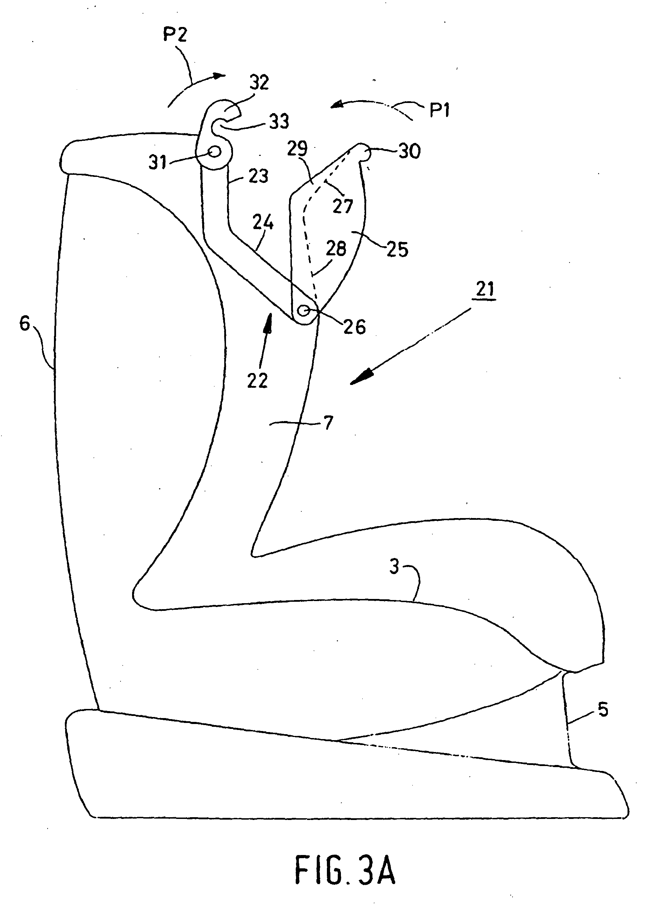

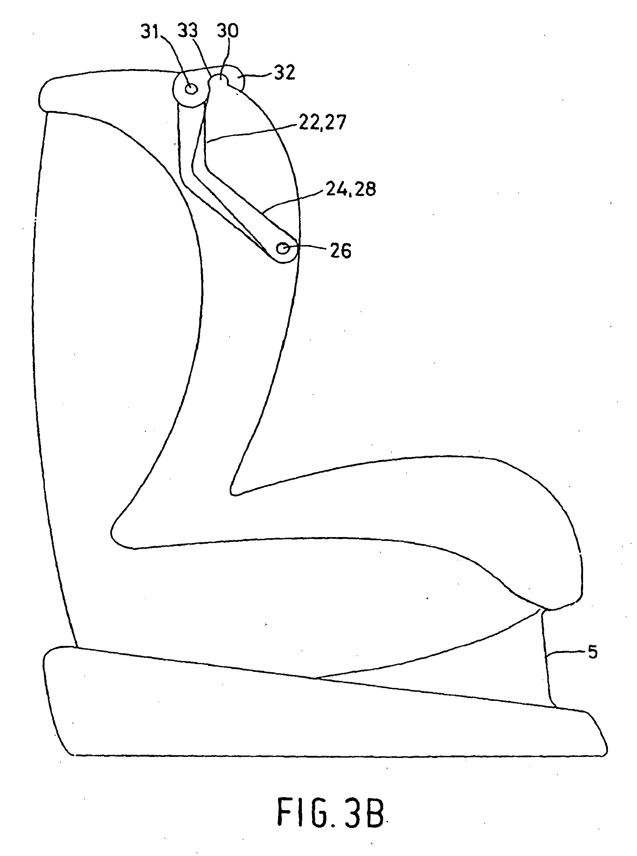

Figures 3A-5B show a second embodiment of a child vehicle seat 21 according to the invention, which is different from the child vehicle seat 1 in that the belt guides 22 are different. The belt guide 22 comprises two adjoining contact surfaces 23, 24, wherein the first contact surface 23 extends substantially parallel to the adjacent slot 8. The second contact surface 24 extends from the first contact surface 23 in a direction away from the back support towards the seat portion. The child vehicle seat 21 is provided with a clamp 25, which is pivoted to a support 7 by means of a pivot pin 26. The pivot pin 26 is located near an end of the second contact surface 24. The clamp 25 has a first clamping surface 27 and an adjoining second clamping surface 28. The clamp 25 is further provided with flanges 29, which extend beyond the clamping surfaces 27, 28, and a locking pawl 30. Near one end of the first contact surface, the child vehicle seat 21 is provided with a hook 32 that pivots about a pivot pin 31. The hook 32 comprises a recess 33, which can be positioned over the pawl 30 of the clamp 25. To secure the child vehicle seat 21 to a vehicle seat present in a vehicle, the belt 12 is placed into contact with the contact surface 23 at the location of a first belt guide 22 and subsequently positioned against the rear side of the central part 6 of the back support 4 via the slots 8, after which it is led to the belt buckle 14 via the contact surface 24 of the second belt guide 22. As already described above, the hip belt 34 extends along the belt guide 5 that is present at the front side of the child vehicle seat 21 (see figures 4A-5B). After the belt 12 has thus been fitted, the clamps 25 are pivoted in the direction indicated by the arrow P1 until the first clamping surface 27 is substantially parallel to the first contact surface 23 and the second clamping surface 28 is substantially parallel to the first contact surface 24. The flange 29 extends beyond the contact surfaces 23, 24, as a result of which the belt 12 is additionally clamped against the support 7. Then the hook 32 is pivoted in the direction indicated by the arrow P2 until the recess 33 is positioned over the pawl 30 and the belt 12 is thus securely connected to the child vehicle seat 21.

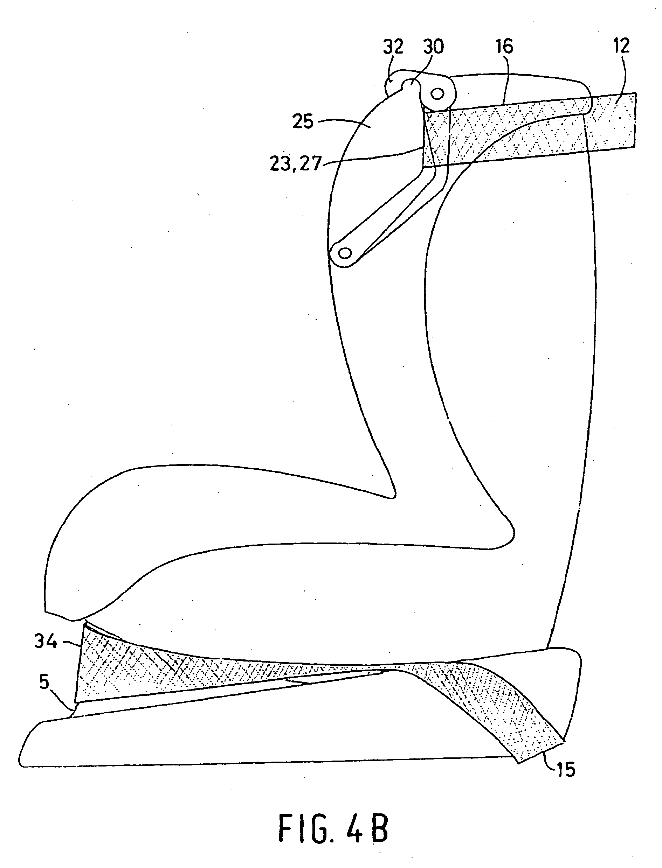

As figures 4A and 4B clearly shown, the belt portion 16 extends over the contact surface 23 and the hip belt 34 extends over the belt guide 5.

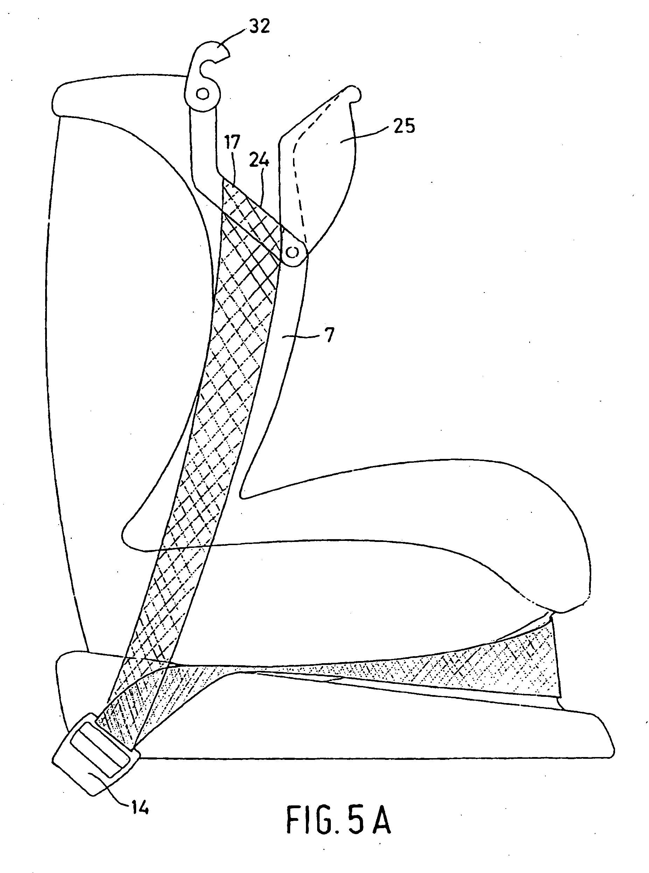

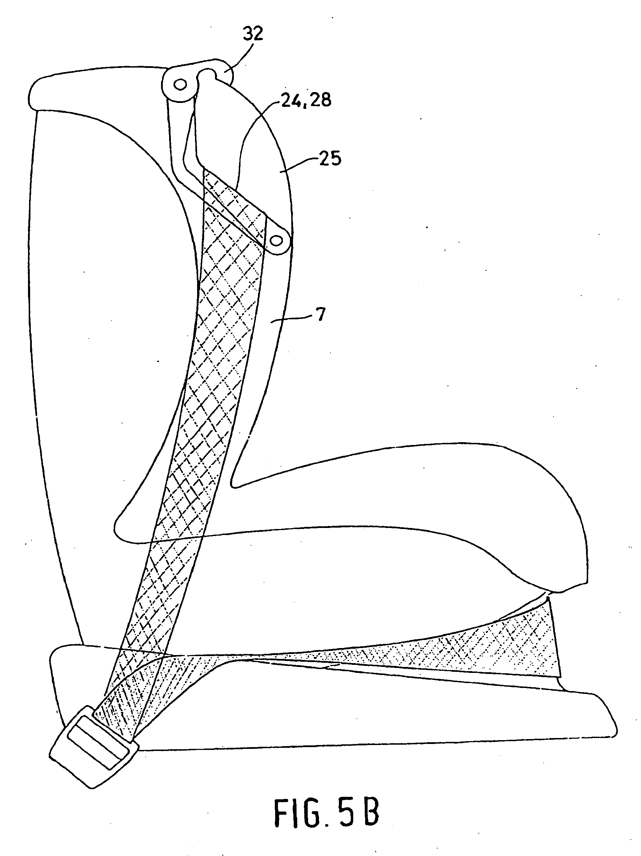

As is clearly shown in figures 5A and 5B, the belt portion 17 of the shoulder belt extends over the second contact surface 24.

The slots and the belt guides are positioned and formed in such a manner that the belt is taut therein, without exhibiting any undesirable kinks.

## Claims

1. A child vehicle seat (1) comprising a seat portion (3) and a back support (4), which back support (4) is provided with belt guides (9) on a side remote from the seat portion (3) for guiding a shoulder belt connected to the vehicle, **characterised in that** the back support (4) is furthermore provided with at least two slots (8) located between the belt guides (9), wherein, in use, the belt extends between said slots (8) on another side of the back support (4) than between a slot (8) and the adjacent belt guide (9).

2. A child vehicle seat (1) according to claim 1, **characterised in that** the belt guide (9) comprises at least two adjoining contact surfaces, wherein the first contact surface (23) extends substantially parallel to a adjacent slot (8), whilst the second contact surface (24) extends from said first contact surface (23) in a direction away from the back support (4) towards the seat portion (3).

3. A child vehicle seat (1) according to claim 2, **characterised in that** the belt guide (9) is provided with a clamp (25) that is pivoted to the child vehicle seat (1) by means of a pivot pin (26), which pivot pin (26) is located near a side of the second contact surface (24) remote from the first contact surface (23), said clamp (25) having at least a first and a second clamping surface (28), which, in the position in which the clamp (25) has been pivoted towards the belt guide (9), extend substantially parallel to the first and the second contact surface (24), respectively.

4. A child vehicle seat (1) according to claim 3, **characterised in that** the clamp (25) can be detachably interlocked with the belt guide (9) on a side remote from the pivot pin (26).

5. A child vehicle seat (1) according to any one of the preceding claims, **characterised in that** the belt guide (9) comprises a slot provided in the back support (4).

6. A child vehicle seat (1) according to claim 5, **characterised in that** the slot comprises at least two slot portions (10, 11) connecting to each other, wherein the first portion (10) extends parallel to the adjacent slot (8), whilst the second portion (11) extends from said first portion (10) in a direction away from the back support (4) towards the seat portion (3).

7. A child vehicle seat (1) according to any one of the preceding claims, **characterised in that** the child vehicle seat (1) is provided with a belt guide (5) near a front side of the seat portion (3) remote from the back support (4), which belt guide (5) functions to guide a hip belt (34) that is connected to a vehicle.

## Patentansprüche

1. Fahrzeugkindersitz (1) mit einem Sitzabschnitt (3) und einer Rückenlehne (4), die auf der vom Sitzabschnitt (3) entfernten Seite mit Gurtführungen (9) zum Führen eines mit dem Fahrzeug verbundenen Schultergurts versehen ist, **dadurch gekennzeichnet, dass** die Rückenlehne (4) ferner mit mindestens zwei zwischen den Gurtführungen (9) angeordneten Schlitzen (8) versehen ist, wobei sich der Gurt beim Gebrauch zwischen den Schlitzen (8) auf einer anderen Seite der Rückenlehne (4) als zwischen einem Schlitz (8) und der benachbarten Gurtführung (9) erstreckt.

2. Fahrzeugkindersitz (1) nach Anspruch 1, **dadurch gekennzeichnet, dass** die Gurtführung (9) zumindest zwei zueinander benachbarte Kontaktflächen umfasst, wobei die erste Kontaktfläche (23) sich im wesentlichen parallel zu einem benachbarten Schlitz (8) erstreckt, während die zweite Kontaktfläche (24) sich von der ersten Kontaktfläche (23) in einer von der Rückenlehne (4) hinweg zum Sitzabschnitt (3) weisenden Richtung erstreckt.

3. Fahrzeugkindersitz (1) nach Anspruch 2, **dadurch gekennzeichnet, dass** die Gurtführung (9) mit einer Klemmbacke (25) versehen ist, die mittels eines Drehzapfens (26) zum Fahrzeugkindersitz (1) geschwenkt werden kann, wobei der Drehzapfen (26) in der Nähe einer von der ersten Kontaktfläche (23) entfernten Seite der zweiten Kontaktfläche (24) angebracht ist, wobei die Klemmbacke (25) zumindest eine erste und eine zweite Klemmfläche (28) aufweist, die sich in der Stellung, in der die Klemmbacke (25) zur Gurtführung (9) hin geschwenkt wurde, im wesentlichen parallel zur ersten beziehungsweise zweiten Kontaktfläche (24) erstrecken.

4. Fahrzeugkindersitz (1) nach Anspruch 3, **dadurch gekennzeichnet, dass** die Klemmbacke (25) auf einer vom Drehzapfen (26) entfernten Seite mit der Gurtführung (9) lösbar verriegelt werden kann.

5. Fahrzeugkindersitz (1) nach einem der vorangehenden Ansprüche, **dadurch gekennzeichnet, dass** die Gurtführung (9) einen in der Rückenlehne (4) angebrachten Schlitz umfasst.

6. Fahrzeugkindersitz (1) nach Anspruch 5, **dadurch gekennzeichnet, dass** der Schlitz zumindest zwei miteinander verbundene Schlitzabschnitte (10, 11) umfasst, wobei der erste Schlitzabschnitt (10) sich parallel zum angrenzenden Schlitz (8) erstreckt, während der zweite Schlitzabschnitt (11) sich vom ersten Schlitzabschnitt (10) in einer Richtung weg von der Rückenlehne (4) zum Sitzabschnitt (3) hin erstreckt.

7. Fahrzeugkindersitz (1) nach einem der vorangehenden Ansprüche, **dadurch gekennzeichnet, dass** er nahe der Vorderseite des Sitzabschnitts (3) entfernt von der Rückenlehne (4) mit einer Gurtführung (5) versehen ist, die als Führung eines mit dem Fahrzeug verbundenen Beckengurts (34) wirkt.

## Revendications

1. Siège d'enfant pour véhicule (1) comprenant une partie de siège (3) et un support arrière (4), lequel support arrière (4)est pourvu de guides de ceinture (9) sur un côté éloigné de la partie de siège (3) pour guider une ceinture reliée au véhicule, **caractérisé en ce que** le support arrière (4) est en outre pourvu d'au moins deux fentes (8) situées entre les guides de ceinture (9), dans lequel, en utilisation, la ceinture s'étend entre lesdites fentes (8) sur un autre côté du support arrière (4) qu'entre une fente (8) et le guide de ceinture (9) adjacent.

2. Siège d'enfant pour véhicule (1) selon la revendication 1, **caractérisé en ce que** le guide de ceinture (9) comprend au moins deux surfaces de contact contiguës, dans lequel la première surface de contact (23) s'étend sensiblement parallèle à une fente (8) adjacente, alors que la seconde surface de contact (24) s'étend depuis ladite première surface de contact (23) dans une direction s'éloignant du support arrière (4) vers la partie de siège (3).

3. Siège d'enfant pour véhicule (1) selon la revendication 2, **caractérisé en ce que** le guide de ceinture (9) est pourvu d'une bride (25) qui est pivotée vers le siège d'enfant pour véhicule (1) au moyen d'un axe de pivot (26), lequel axe de pivot (26) est situé près d'un côté de la seconde surface de contact (24) à distance de la première surface de contact (23), ladite bride (25) ayant au moins une première et une seconde surfaces de serrage (28), qui, dans la position dans laquelle la bride (25) a été pivotée vers le guide de ceinture (9), s'étend sensiblement parallèle à la première et la seconde surface de contact (24), respectivement.

4. Siège d'enfant pour véhicule (1) selon la revendication 3, **caractérisé en ce que** la bride (25) peut être verrouillée de manière détachable avec le guide de ceinture (9) sur un côté à distance de l' axe de pivot (26),

5. Siège d'enfant pour véhicule (1) selon l'une quelconque des revendications précédentes, **caractérisé en ce que** le guide de ceinture (9) comprend une fente pratiquée dans le support arrière (4).

6. Siège d'enfant pour véhicule (1) selon la revendication 5, **caractérisé en ce que** la fente comprend au moins deus parties de fente (10, 11) se connectant ensemble, dans lequel la première partie (10) s'étend parallèle à la fente (8) adjacente, alors que la seconde partie (11) s'étend depuis ladite première partie (10) dans une direction s'éloignant du support arrière (4) vers la partie de siège (3).

7. Siège d'enfant pour véhicule (1) selon l'une quelconque des revendications précédentes, **caractérisé en ce que** le siège d'enfant pour véhicule (1) est pourvu d'un guide de ceinture (5) près d'un côté avant de la partie de siège (3) à distance du support arrière (4), lequel guide de ceinture (5) fonctionne pour guider une ceinture de hanche (34) qui est reliée à un véhicule.
